(19) 

Europäisches Patentamt

European Patent Office

Office européen des brevets

(11) **EP 3 138 238 B1**

(12) **EUROPEAN PATENT SPECIFICATION**

(45) Date of publication and mention
of the grant of the patent:
**03.06.2020 Bulletin 2020/23**

(21) Application number: **15792304.6**

(22) Date of filing: **29.04.2015**

(51) Int Cl.:
**H04L 12/24** *(2006.01)*      **H04L 12/26** *(2006.01)*

(86) International application number:
**PCT/CN2015/077810**

(87) International publication number:
**WO 2015/172657 (19.11.2015 Gazette 2015/46)**

(54) **SYSTEM AND METHOD FOR ANOMALY DETECTION**

SYSTEM UND VERFAHREN ZUR DETEKTION VON ANOMALIEN

SYSTÈME ET PROCÉDÉ POUR UNE DÉTECTION D'ANOMALIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2014 US 201414278854**

(43) Date of publication of application:
**08.03.2017 Bulletin 2017/10**

(73) Proprietor: **Huawei Technologies Co., Ltd.
Longgang District
Shenzhen, Guangdong 518129 (CN)**

(72) Inventors:
• **GOPALAKRISHNAN, Nandu**
**Chatham, NJ 07928 (US)**
• **SHEEN, Baoling**
**Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2012/140601      WO-A1-2013/044974
CN-A- 1 770 885      CN-A- 1 996 888
US-A1- 2013 329 571      US-A1- 2013 339 515
US-B2- 7 444 263**

• **Ling Huang: "D-Trigger: A general framework for efficient online detection", Beijing University of Aeronautics and Astronautics, 20 December 2007 (2007-12-20), XP055361112, ISBN: 978-0-549-52870-8 Retrieved from the Internet: URL:http://citeseerx.ist.psu.edu/viewdoc/d ownload?doi=10.1.1.419.9425&rep=rep1&type= pdf [retrieved on 2017-04-03]**
• **Gerhard Münz ET AL: "Traffic Anomaly Detection Using K-Means Clustering", GI/ITG Workshop MMBnet, 14 September 2007 (2007-09-14), XP055361488, Retrieved from the Internet: URL:https://pdfs.semanticscholar.org/634e/ 2f1a20755e7ab18e8e8094f48e140a32dacd.pdf [retrieved on 2017-04-04]**
• **SRINIVASAN N ET AL: "Reduction of False Alarm Rate in Detecting Network Anomaly using Mahalanobis Distance and Similarity Measure", SIGNAL PROCESSING, COMMUNICATIONS AND NETWORKING, 2007. ICSCN '07 . INTERNATIONAL CONFERENCE ON, IEEE, PI, 1 February 2007 (2007-02-01), pages 366-371, XP031103522, ISBN: 978-1-4244-0996-9**
• **HOOD C S ET AL: "PROBABILISTIC NETWORK FAULT DETECTION", GLOBAL TELECOMMUNICATIONS CONFERENCE 1996, GLOBECOM '96; [GLOBAL TELECOMMUNICATIONS CONFERENCE (GLOBECOM)],, 18 November 1996 (1996-11-18), pages 1872-1876, XP000748773, ISBN: 978-0-7803-3337-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a system and method for wireless communications, and, in particular, to a system and method for anomaly detection.

BACKGROUND

In network elements of a radio access network, such as base stations (or NodeBs or eNodeBs or cells) or radio network controllers (RNCs) of a cellular system, anomalies occur every now and then. Examples of anomalies include cell outage (e.g., sleeping cell), which may be indicated by key performance indicators (KPIs) with unusually poor (low or high) values. Anomalies may also occur in the form of unusual or broken relationships or correlations observed between sets of variables. It is desirable for anomalies to be rapidly detected while minimizing false alarms.

An anomaly has a root cause, such as malfunctioning user equipment (UE) or network element, interference, resource congestion from heavy traffic, in particular the bottleneck may be the downlink bandwidth, uplink received total wideband power, downlink bandwidth (codes or resource blocks), uplink bandwidth (resource blocks), backhaul bandwidth, channel elements (CE), control channel resources, etc. It is desirable to determine the root cause of an anomaly. From WO 2012/140601 A1 anomaly detection methods using the Mahalanobis distance are known.

From the contribution "D-Trigger: A general framework for efficient online detection", Ling Huang; Beijing University of Aeronautics and Astronautics, 20 December 2007, XP055361112, ISBN: 978-0-549-52870-8 technical details concerning efficient online detection utilizing continuous signals are known.

From US 2013/0329571 A1 failure analysis devices for communication networks are known. From the contribution "Traffic Anomaly Detection Using K-Means Clustering", Gerhard Münz et al., GI/ITG Workshop MMBnet, 14 September 2007, XP055361488 the use of k-means clustering for traffic anomaly detection is known.

From the contribution "Reduction of False Alarm Rate in Detecting Network Anomaly using Mahalanobis Distance and Similarity Measure", N. Srinivasan et al., SIGNAL PROCESSING, COMMUNICATIONS AND NETWORKING, 2007. ICSCN '07 INTERNATIONAL CONFERENCE ON, IEEE, PI, 1 February 2007, pages 366-371, XP031103522, ISBN: 978-1-4244-0996-9 methods to reduce the number of false alarms related to anomalies in network systems are known.

From the contribution "PROBABILISTIC NETWORK FAULT DETECTION", C. S. Hood et al., GLOBAL TELECOMMUNICATIONS CONFERENCE 1996, GLOBECOM '96, 18 November 1996, pages 1872-1876, XP000748773, ISBN: 978-0-7803-3337-6 methods concerning the probabilities in network fault detection systems are known.

SUMMARY

A method of detecting an anomaly and an anomaly detecting system according to the independent claims are provided. Dependent claims provide preferred embodiments.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention.

BRIEF DESCRIPTION OF THE DRAWINGS

For a more complete understanding of the present invention, and the advantages thereof, reference is now made to the following descriptions taken in conjunction with the accompanying drawing, in which:

Figure 1 illustrates an embodiment wireless network for communicating data;
Figure 2 illustrates a flowchart for an embodiment method of anomaly detection;
Figures 3A-B illustrate example probability density functions;
Figure 4 illustrates a probability density function with example data points;
Figure 5 illustrates a flowchart for another embodiment method of anomaly detection;
Figures 6A-B illustrate an example probability density function;
Figure 7 illustrates example data;
Figure 8 illustrates an example histogram with inner, middle, and outer bands;

Figure 9 illustrates example inner, middle, and outer bands;
Figure 10 illustrates a graph of example data samples over time;
Figure 11 illustrates a flowchart of an additional embodiment method of anomaly detection;
Figure 12 illustrates an example of a hard decision tree;
Figure 13 illustrates an example of a soft decision tree;
Figure 14 illustrates an example probability function;
Figure 15 illustrates a flowchart for an embodiment method of root cause analysis; and
Figure 16 illustrates a block diagram of an embodiment general-purpose computer system.

Corresponding numerals and symbols in the different figures generally refer to corresponding parts unless otherwise indicated. The figures are drawn to clearly illustrate the relevant aspects of the embodiments and are not necessarily drawn to scale.

DETAILED DESCRIPTION OF ILLUSTRATIVE EMBODIMENTS

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

An embodiment method detects anomalies and the root causes of the anomalies. Examples of root causes of anomalies include malfunctioning user equipment (UE) or network elements, interference, resource congestion from heavy traffic. In particular, the bottleneck may be a downlink power, uplink received total wideband power, downlink bandwidth (codes or resource blocks), uplink bandwidth (resource blocks), backhaul bandwidth, channel elements, (CE), control channel resources, etc. It is desirable to detect and determine the root cause of an anomaly.

Some anomaly detection methods select thresholds on variables or distance metrics yielding a decision boundary based on the structure of training data to determine that outliers are represent anomalies. However, selection of the threshold often trades off false alarms with missed anomalies and detection time. An embodiment method uses two thresholds levels to detect anomalies. When the data point is below the lower threshold, it is determined to not indicate an anomaly. When the data point is above the higher threshold, it is determined to indicate an anomaly. When the data point is between the thresholds, the history is used to determine whether the data point indicates an anomaly.

The root cause of a detected anomaly is determined in an embodiment method. A hard decision tree may be used. The decision tree may be created by an expert or learned from the data. However, hard detection trees may lead to an unknown diagnosis of the root cause or to a misdiagnosis. An embodiment method uses a soft decision tree to one or more likely root causes of an anomaly by mapping metric into a probability via the logistic function. Then, the probabilities are multiplied together invoking the naive Bayes assumption of independent attributes. As a result, the most likely root cause or top few likely root causes are determined, along with a probability or confidence measure for each cause.

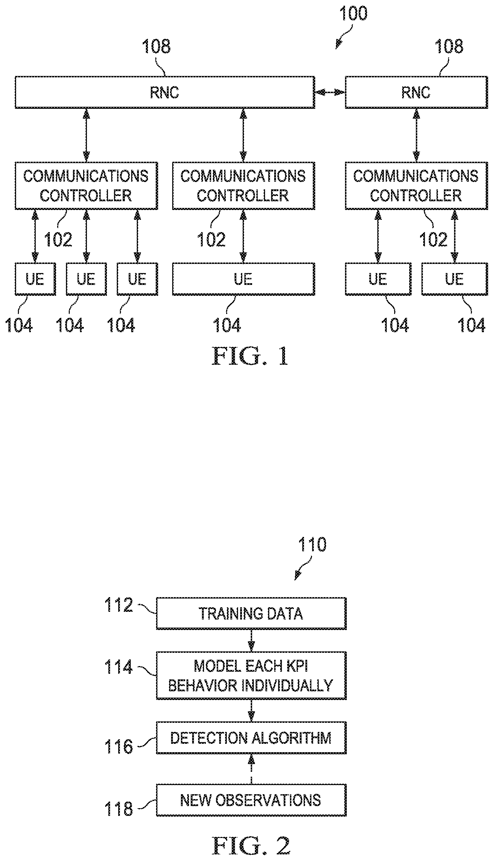

Figure 1 illustrates wireless network 100 for wireless communications. Network 100 includes radio network controllers (RNCs) 108 which communicate with each other. RNCs 108 are coupled to communications controllers 102. A plurality of user equipments (UEs) 104 are coupled to communications controllers 102. Communications controllers 102 may be any components capable of providing wireless access by, inter alia, establishing uplink and/or downlink connections with UEs 104, such as base stations, an enhanced base stations (eNBs), access points, picocells, femtocells, and other wirelessly enabled devices. UEs 104 may be any component capable of establishing a wireless connection with communications controllers 102, such as cell phones, smart phones, tablets, sensors, etc. In some embodiments, the network 100 may include various other wireless devices, such as relays, femtocells, etc. Embodiments may detect anomalies on a network, such as network 100. Also, the network may determine the root cause of a detected anomaly.

Figure 2 illustrates flowchart 110 for a method of detecting anomalies. Training data is stored in block 112. The training data is historical data. In block 114 individual features are modeled. For example, a key performance index (KPI) is examined for each feature.

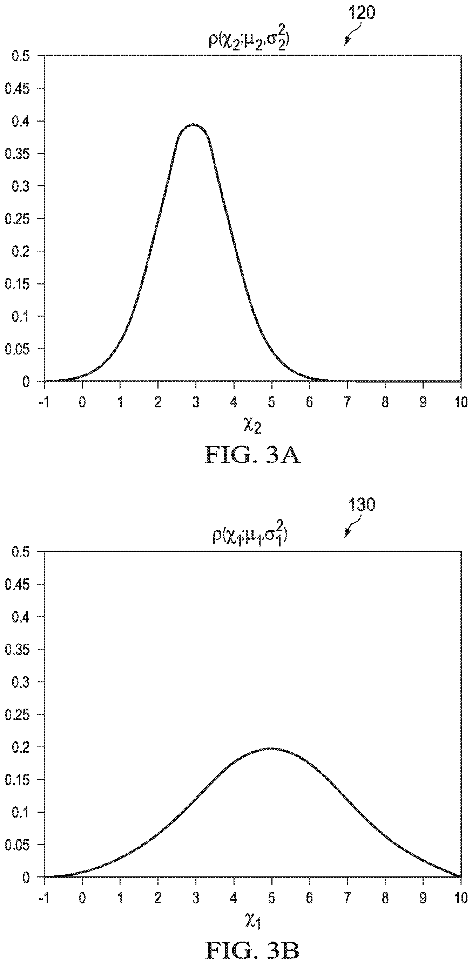

Probability density functions may be used to determine whether a data point is likely to be an anomaly. Data points close to the center are likely to not indicate anomalies, while data points in the tails are likely to indicate anomalies. The center may be the mean, median, or another value indicating the center of the expected values. Figures 3A-B illustrate probability density functions 120 and 130, respectively. Probability density function 120 has a narrow peak and a low variance, while probability density function 130 has a wider peak and a larger variance. The mean of a probability density function is given by:

$$\mu_j = \frac{1}{m}\sum_{i=1}^{m} x_j^{(i)},$$

and the variance is given by:

$$\sigma_j^2 = \frac{1}{m}\sum_{i=1}^{m}\left(x_j^{(i)} - \mu_j\right)^2.$$

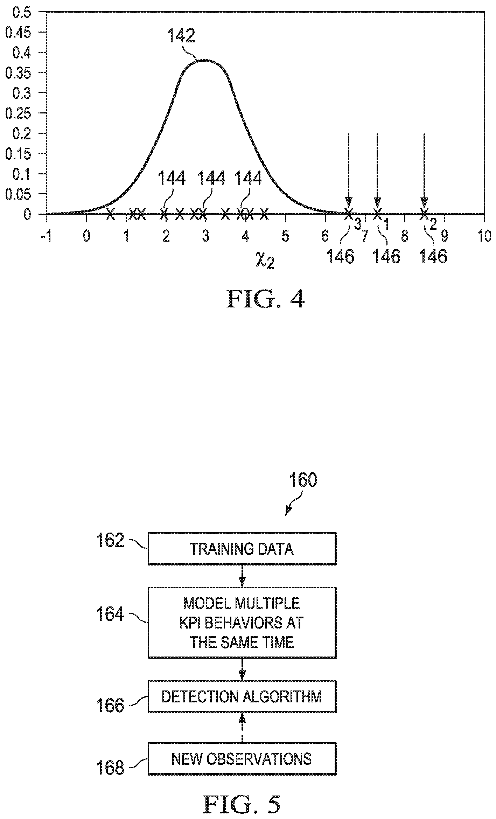

In block 116, a detection algorithm detects anomalies based on new observations 118 using the modeled data. Figure 4 illustrates probability density function 142 with data points 144 in the normal range of probability density function 142, and data points 146 in the tail of probability density function 142, which are likely anomalies. The probability to determine that new observations are not anomalies is given by:

$$p(x) = \prod_{j=1}^{n} p\left(x_j; \mu_j, \sigma_j^2\right) = \prod_{j=1}^{n}\frac{1}{\sqrt{2\pi}\sigma_j} e^{\frac{-(x_j-\mu_j)^2}{2\sigma_j^2}}.$$

Abnormal validation data points determine the probability of the data being normal. A new input $x_i$, is predicted to be anomalous if:

$$p(x_i) < \varepsilon,$$

where $\varepsilon$ is a threshold learned, for example, from historical data.

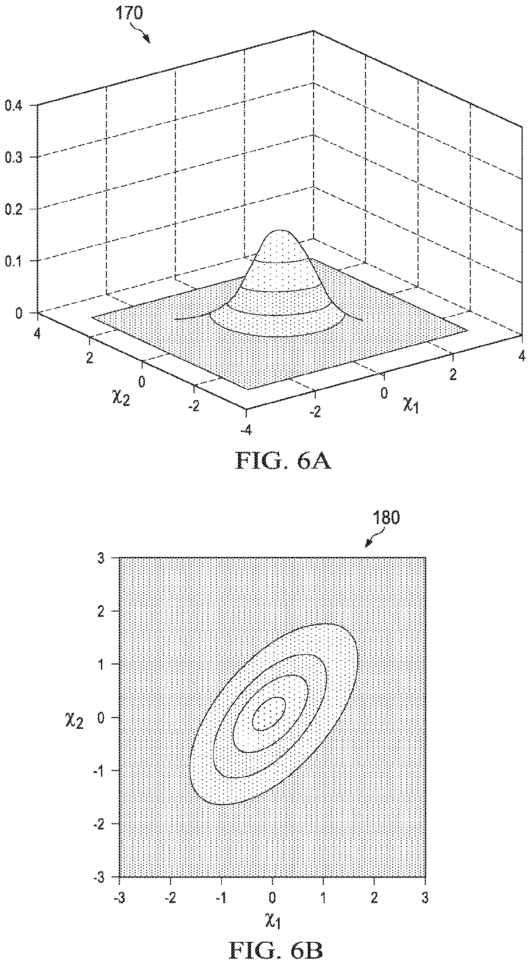

Figure 5 illustrates flowchart 160 for a method of detecting anomalies with multiple variables. Multiple KPI behaviors at the same time are modeled in block 164 using training data from block 162. Figures 6A-B illustrates graphs 170 and 180 of a two dimensional probability density function. The variables $x_1$ and $x_2$ are independent variables. The relationships among KPIs are learned. The mean is given by:

$$\mu = \frac{1}{m}\sum_{i=1}^{m} x^{(i)}.$$

Also, the variance is given by:

$$\Sigma = \frac{1}{m}\sum_{i=1}^{m}\left(x^{(i)} - \mu\right)\left(x^{(i)} - \mu\right)^T.$$

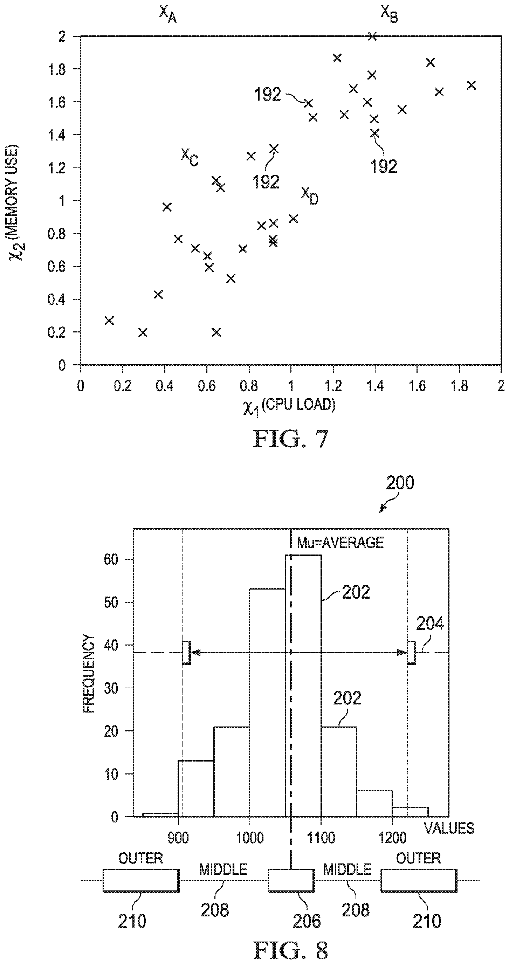

A detection algorithm in block 166 detects anomalies from new observations from block 168 using modeled data. Figure 7 illustrates a graph of existing data points 192 and new data points $x_A$, $x_B$, $x_C$, and $x_D$. These new data points are on the outskirts of the training data and are likely anomalies, especially $x_1$. In this example, one variable is central processing unit (CPU) load and the other variable is memory use. The Mahalanobis distance and probability are calculated. The probability to determine that the new observation is not an anomaly is given by:

$$p(x; \mu, \Sigma) = \frac{1}{(2\pi)^{n/2}|\Sigma|^{1/2}} e^{\left(-\frac{1}{2}(x-\mu)^T\Sigma^{-1}(x-\mu)\right)}.$$

The covariance matrix and the shape of the angle are used. Abnormal validation datasets are used to determine $\varepsilon$, the threshold. A new input $x_i$ is predicted to be anomalous when:

$$p(x_i) < \varepsilon.$$

An embodiment uses an inner band, a middle band, and an outer band of a probability density function to detect an anomaly. Figure 8 illustrates graph 200 with inner band 206, middle band 208, and outer band 210 for probability density histogram 202, a one dimensional probability density. Curve 204 illustrates an example of a single threshold which may be used to detect anomalies. Data points corresponding to a frequency above the threshold are determined to not be anomalies, and values below the threshold are determined to be anomalies. Data points in the inner band are determined to not be anomalies, while data points in the outer band are determined to be anomalies. Data points in the middle band may or may not be determined to be anomalies. There is a lower threshold between the inner and middle bands and an upper threshold between the middle and outer bands.

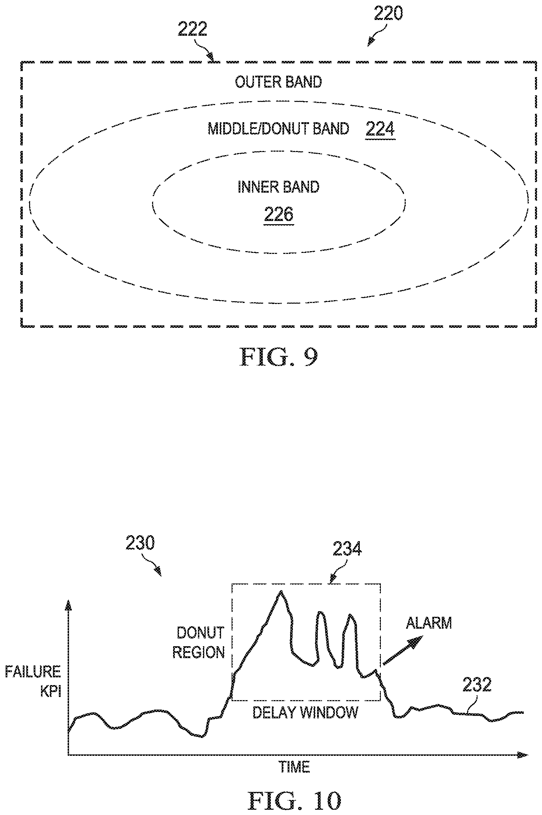

Figure 9 illustrates graph 220 with inner band 226, middle or donut band 224, and outer band 222 for a bivariate two dimensional metric space Gaussian example. Three dimensional or $n$ dimensional examples may be used. As in the one dimensional case, there is a lower threshold between the inner band and the middle band, and an upper threshold between the middle band and the outer band. The inner threshold and the outer threshold are points of equal distance elliptical contours. The Mahalanobis distance may be used as a metric for the multi-dimensional case. Prior weighted average Mahalanobis distances may be used when the data is structured as a mixture of Gaussian clusters. The parameters of each cluster mode are learned.

The lower and upper thresholds are derived from historical or training data for the KPI sets. Highly fluctuating KPIs, for example high variance or heavy tail KPIs, such as packet switching (PS) throughput, have a wider distance between the lower and upper threshold. The lower and upper thresholds are closer together for more stable KPIs, such as security mode command failures. In one example, a user selects the sensitivity. When the user increases the sensitivity, more anomalies will be detected at the expense of more false positives. With a higher sensitivity, the donut region shrinks. A user may also select a sacrosanct KPI expectation. When a KPI passes above this absolute threshold, regardless of the degree of deviation from normal, an alarm is raised. Thus, the user selects the upper threshold.

When a metric, for example the Mahalanobis distance of a vector of metrics passes beyond the upper threshold to the outer band, an alarm is raised. When the metric passes within the lower threshold to the inner band no alarm is raised, and the alarm is turned off if it were previously on. Also, the delay window timer is reset. When the observed metric enters the middle band or donut region between the lower and upper thresholds, the delay window timer is set. If the observed metric is still in the middle band when the delay window timer expires, an alarm is raised. In one example, the delay window is a fixed value. Alternatively, the delay window depends on the trend of the observed metric. If the value continues to get worse, the alarm is raised earlier. Figure 10 illustrates graph 230 of metric 232 over time. Initially, metric 232 is in the inner band, and there is a low probability of an anomaly. Metric 232 enters the donut region, and delay window timer 234 is set. The metric does not reach the upper threshold. However, because the metric is still in the donut band when the delay window timer expires, an alarm is raised. If the metric returned to the inner band before the delay window timer expires, no alarm is raised, and the delay window timer is reset. If the metric again enters the donut band from the inner band, the delay window timer is set again. Operation is similar for two or more variables.

To minimize false alarms and missed detection of anomalies, a wider range between the lower and upper threshold, yielding a larger middle band, may be used. The observations are more likely to stay between these bounds, serving as safety guards. The alarm may be triggered based on the consistency and trend over the delay window. This takes more time, but produces fewer false alarms. Alarms may be more obvious, for example, at the cell level than the RNC level. At the RNC level the aggregate of cells is more stable.

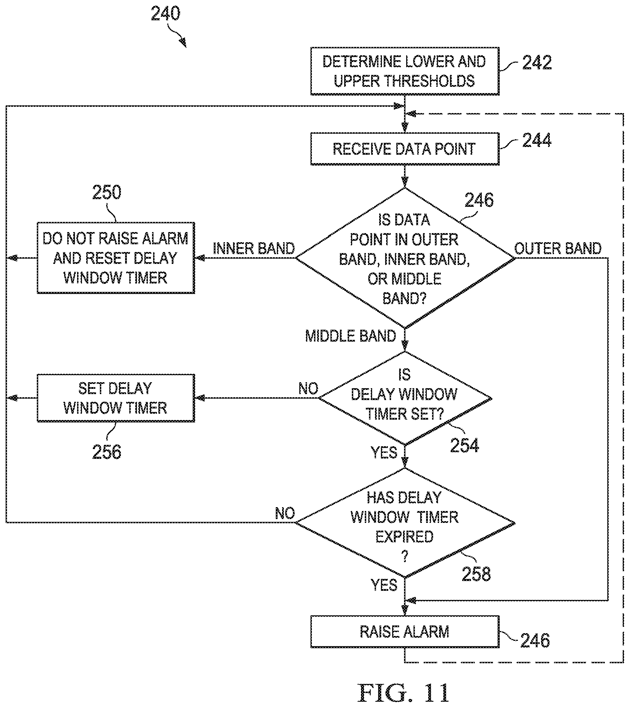

Figure 11 illustrates flowchart 240 for a method of detecting anomalies. Initially, in step 242, upper threshold and lower threshold are determined. This is done based on historical or training data. Values which are well within the normal region are below the lower threshold, values which are well outside the normal region are outside the upper threshold, and intermediate values are between the lower threshold and the upper threshold. In one example, a user hard sets the upper threshold. The span between the lower threshold and the upper threshold are set to trade off the sensitivity and false alarm rate with detection time. A larger distance between the lower threshold and upper threshold increases the sensitivity and decreases the false alarm rate at the expense of detection time. The size of the delay window may also be set in step 242. In one example, these values are initially set before receiving data. In another example, these values are periodically updated based on performance.

Next, in step 244, a data point is received. The data point may be a value in a cellular system, or another system.

Then, in step 246, the system determines whether the data point is in the inner band, the middle band or the outer band. When the data point is in the outer band, the system proceeds to step 246 and an alarm is raised. The alarm may trigger root cause analysis. The system may also return to step 244 to receive the next data point.

When the data point is in the inner band, the system proceeds to step 250. No alarm is raised, and the alarm is reset if it were previously raised. Also, the delay window timer is reset if it were previously set. The system then proceeds to step 244 to receive the next data point.

When the data point is in the middle band, the system proceeds to step 254. In step 254, the system determines whether the delay window timer has previously been set. When the delay window timer has not previously been set, the system is just entering the middle band, and proceeds to step 256.

In step 256, the system sets the delay window timer. Then, it proceeds to step 244 to receive the next data point.

When the delay window timer has been previously set, the system proceeds to step 258, where it determines whether the delay window timer has expired. When the delay window timer has not expired, the system proceeds to step 244 to receive the next data point. When the delay window timer has expired, the system proceeds to step 246 to raise an alarm. The system may also consider other factors in deciding to set the alarm, such as the trend. When the data point is trending closer to the upper threshold, an alarm may be raised earlier.

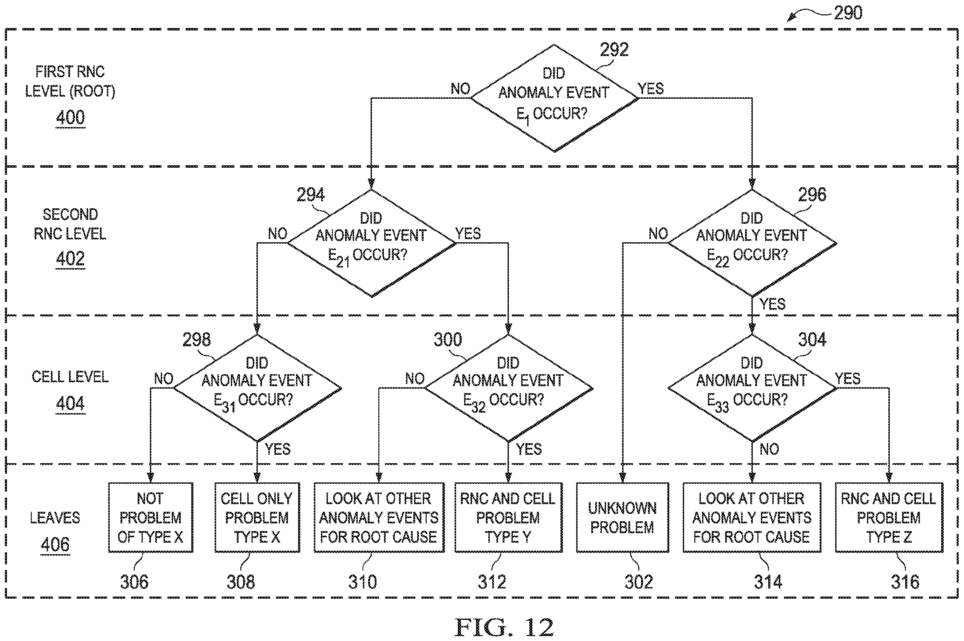

After an anomaly is detected, it is desirable to determine the root cause of the anomaly. Figure 12 illustrates decision tree 290 for determining a root cause of an anomaly. Some examples of root causes are that the UE is in a coverage hole, there is a big truck blocking coverage of a UE, or that there is a software bug in a UE operating system or in the cellular network. The decision tree is generated from engineering experience or mined from labeled historic data, and may be modified when new causes of anomalies are detected. Decision tree 290 is a hard decision tree, where a path is chosen at each node. Also, decision tree 290 is hierarchical, with drilling down to lower levels performed by special metric sets and/or network nodes. There are three decision levels of decision tree 290: first RNC level 400, the root level, second RNC level 402, and cell level 404. Causes level 406 contains the leaves. A tree node for event Eij acts on a set of test metrics Sij by computing a learned non-linear function, such as a Mahalanobis distance. The tree node compares the output of the function against a threshold to determine a yes or no hard decision.

Initially, in node 292, the system determines whether anomaly event $E_1$ occurred. General metric set $S_1$ is determined, and is compared to a threshold. For example, when the metric is greater than the threshold, anomaly event $E_1$ occurred, and the system proceeds to node 296, and when the metric is less than or equal to the threshold $\tau_1$, anomaly event $E_1$ did not occur, and the system proceeds to node 294.

In node 296, the system determines whether anomaly event $E_{22}$ occurred. Specific metric $S_{22}$ is determined. Then, specific metric $S_{22}$ is compared to a threshold $\tau_{22}$. When the metric is less than the threshold, anomaly event E22 did not occur, and the system proceeds to node 302, where it determines that the anomaly is an unknown problem. This may happen, for example, the first time this anomaly occurs. When the metric is greater than the threshold, anomaly event $E_{22}$ occurred, and the system proceeds to node 304.

In node 304, the system determines whether anomaly event $E_{33}$ occurred. Metric $S_{33}$ is determined, and compared to a threshold $\tau_{33}$. When the metric is less than the threshold, anomaly event $E_{33}$ has not occurred, and the system looks for other anomaly events to determine the root cause in node 314. On the other hand, when the metric is greater than the threshold, it is determined that anomaly event $E_{33}$ has occurred. Then, in node 316, the root cause is determined to be RNC and cell problem type Z.

In node 294, the system determines whether anomaly event $E_{21}$ occurred. Metric $S_{21}$ is determined, and compared to a threshold $\tau_{21}$. When metric $S_{21}$ is less than the threshold, it is determined that anomaly event $E_{21}$ did not occur, and the system proceeds to node 298. On the other hand, when metric $S_{21}$ is greater than or equal to the threshold, the system proceeds to node 300, determining that anomaly event $E_{21}$ did occur.

In node 298, the system determines whether anomaly event $E_{31}$ occurred. Metric $S_{31}$ is determined, and compared to a threshold $\tau_{31}$. When metric $S_{31}$ is less than the threshold, it is determined that anomaly event $E_{31}$ did not occur, and the anomaly is not a problem of type X in node 306. When metric $S_{31}$ is greater than or equal to the threshold, it is determined that the problem is a cell only problem of type X in node 308.

In node 300, the system determines whether anomaly event $E_{32}$ occurred. Metric $S_{32}$ is determined, and compared to a threshold $\tau_{32}$. When metric $S_{32}$ is less than the threshold, it is determined that anomaly event $E_{32}$ did not occur, and, in node 310, it is determined to look at other anomaly events for the root cause. When metric $S_{32}$ is greater than or equal to the threshold, it is determined that the problem is an RNC and cell problem of type Y in node 312. Decision tree 290 is a binary tree, but a non-binary tree may be used. For example, there may be joint analysis of two events A and B with four mutually exclusive leaves: A and B, A and not B, not A and B, and not A and not B. If A and B arise from different components, then the respective probabilities are multiplied. Likewise, there may be eight leaves for 3 potential events, and so on.

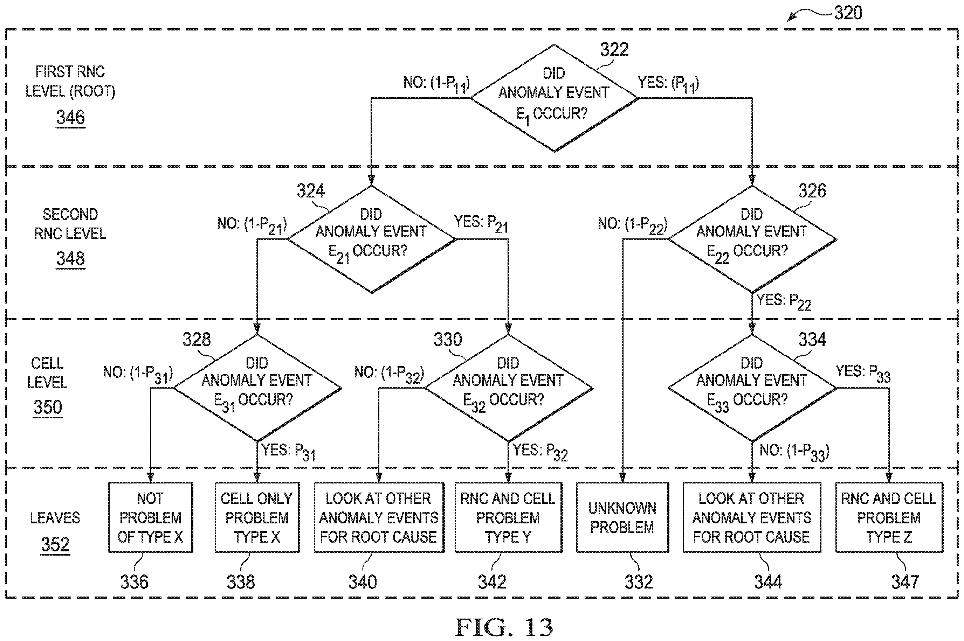

Figure 13 illustrates soft decision tree 320, which is used to determine the cause of an anomaly. Using a soft decision tree, the probability that a particular problem caused the anomaly may be determined. One or more likely root cause(s) may be determined. The probability that a given node is yes, Pij, is the logistic function operating on the learned function value threshold difference for the output probability of anomaly event Eij. The probability is determined form the distance from the mean. The probability is given by:

$$P_{ij} = \frac{1}{1 + e^{-\left(f\left(x_{ij}\right) - \tau_{ij}\right)}},$$

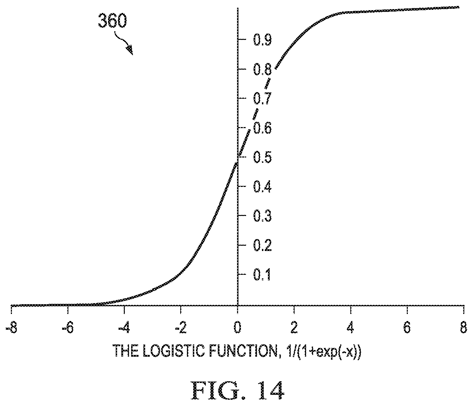

where f($x_{ij}$) is the learned function, for example the mahalanobus distance, its argument x is the test vector, and $\tau_{ij}$ is the threshold. Figure 14 illustrates graph 360, an example logistic function. The probability of a no is 1-Pij. This is because of the mutual exclusivity of events and their complements at the nodes in the tree, which implies that a set of leaves or root causes are mutually exclusive.

Given nodes ij and kl, corresponding to events $E_{ij}$ and $E_{kl}$, respectively, the edge weight between the nodes, if it exists on the decision tree, is denoted by (ij, kl). The probabilities are converted to a distance via a transform, so that the edge weight is given by:

$$D_{ij,kl} = \ln(P_{ij})$$

when (ij, kl) exists on a yes branch, and by:

$$D_{ij,kl} = \ln(1 - P_{ij})$$

when (ij, kl) exists on a no branch. The edge weight is ∞ otherwise. $D_{ij,kl}$ decreases as Pij increases for a yes edge and as (1 -Pij) increases for a no edge. To find the final likelihood of a root cause in a node, $D_{ij,kl}$ is summed along the path to that leaf from the root. The shortest distance path from the root node to one of the leaf nodes is the most likely root cause. Several likely root causes may be considered, along with their likelihood. For example, all root causes with a distance below a threshold may be considered. Alternatively, the two, three, or more of the smallest edge distances are considered. The most likely path or set of events is the argument of the minimum (arg min) path from the root to the leaves, that is:

$$\Sigma_{(ij,kl)\in path} D_{ij,kl}.$$

In the naive Bayes assumption, the additive distances along edges of a candidate path leads to multiplicative probabilities for independent events Eij along the path.

Soft decision tree 320 has root level of first RNC level 346, two intermediate levels, second RNC level 348 and cell level 350, and a root cause level, leaves 352. Initially, in node 322, the system determines the probability $P_{11}$ that anomaly event $E_{11}$ occurred. This probability is given by:

$$P_{11} = \frac{1}{1+e^{-(f(x_{11})-\tau_{11})}},$$

where $f(x_{11})$ is the learned for the measurement for anomaly event $E_{11}$, and $\tau_{11}$ is the threshold for event $E_{11}$. The probability that anomaly event $E_{11}$ did not occur is given by (1-$P_{11}$).

Then, the probabilities are determined for second RNC level 348. The probability $P_{21}$ that anomaly event $E_{21}$ occurred is determined in node 324. This probability is given by:

$$P_{21} = \frac{1}{1+e^{-(f(x_{21})-\tau_{21})}},$$

where $f(x_{21})$ is the learned for the measurement for anomaly event $E_{21}$, and $\tau_{21}$ is the threshold for event $E_{21}$. The probability that anomaly event $E_{21}$ did not occur is given by (1-$P_{21}$). Similarly, in node 326, the probability $P_{22}$ that anomaly event $E_{22}$ occurred is determined by:

$$P_{22} = \frac{1}{1+e^{-(f(x_{22})-\tau_{22})}},$$

where $f(x_{22})$ is the learned for the measurement for anomaly event $E_{22}$, and $\tau_{22}$ is the threshold for event $E_{22}$. The probability that anomaly event $E_{22}$ did not occur is given by (1-$P_{22}$).

Likewise, the probabilities for the cell level anomalies are determined. The probability $P_{31}$ that anomaly event $E_{31}$ occurred is determined in node 328. This probability is given by:

$$P_{31} = \frac{1}{1 + e^{-(f(x_{31}) - \tau_{31})}},$$

where $f(\mathbf{x_{31}})$ is the learned for the measurement for anomaly event $E_{31}$, and $\tau_{31}$ is the threshold for event $E_{31}$. The probability that anomaly event $E_{31}$ did not occur is given by $(1-P_{31})$. Additionally, in node 330, the probability $P_{32}$ that anomaly event $E_{32}$ occurred is determined by:

$$P_{32} = \frac{1}{1 + e^{-(f(x_{32}) - \tau_{32})}},$$

where $f(\mathbf{x_{32}})$ is the learned for the measurement for anomaly event $E_{32}$, and $\tau_{32}$ is the threshold for event $E_{32}$. The probability that anomaly event $E_{32}$ did not occur is given by $(1-P_{32})$. Also, in node 334, the probability $P_{33}$ that anomaly event $E_{33}$ occurred is determined by:

$$P_{33} = \frac{1}{1 + e^{-(f(x_{33}) - \tau_{33})}},$$

where $f(\mathbf{x_{33}})$ is the learned for the measurement for anomaly event $E_{33}$, and $\tau_{33}$ is the threshold for event $E_{33}$. The probability that anomaly event $E_{33}$ did not occur is given by $(1-P_{33})$.

When the probabilities are calculated, the edge weight distance is determined for the leaves. For example, the edge weight distance for node 336, not a problem of type X, is given by:

$$-\ln(1 - P_{11}) - \ln(1 - P_{21}) - \ln(1 - P_{31}).$$

Also, the edge weight distance for node 338, a cell only problem of type X, is given by:

$$-\ln(1 - P_{11}) - \ln(1 - P_{21}) - \ln(P_{31}).$$

Similarly, the edge weight distance for node 340, look at other anomaly events for the root cause, is given by:

$$-\ln(1 - P_{11}) - \ln(P_{21}) - \ln(1 - P_{32}).$$

Additionally, the edge weight distance for node 342, an RNC and cell problem of type Y, is given by:

$$-\ln(1 - P_{11}) - \ln(P_{21}) - \ln(P_{32}).$$

The edge weight distance for node 332, an unknown problem, is given by:

$$-\ln(P_{11}) - \ln(1 - P_{22}).$$

Also, the edge weight distance for node 344, look for other anomaly events for the root cause, is given by:

$$-\ln(P_{11}) - \ln(P_{22}) - \ln(1 - P_{33}).$$

The edge weight distance for node 344, an RNC and cell problem of type Z, is given by:

$$-\ln(P_{11}) - \ln(P_{22}) - \ln(P_{33}).$$

Correlated events along a path may clarify path discovery by strengthening correlated events and suppressing anti-correlated events when conditional probabilities are used. This is tantamount to joint analysis. As an edge strengthens, and the probability approaches one, its complementary edge weakens, with a probability approaches zero. The multiplication of path edge probabilities causes paths with weak edges to disappear quickly. Spurious path outcomes are still possible with noisy signals. To prevent this, leaves may be removed upfront that are uninteresting for anomaly detection. A few shortest paths, or all the paths that are short enough may be retained for reporting and analysis. Several root causes may be likely from an ambiguous ancestor in the tree.

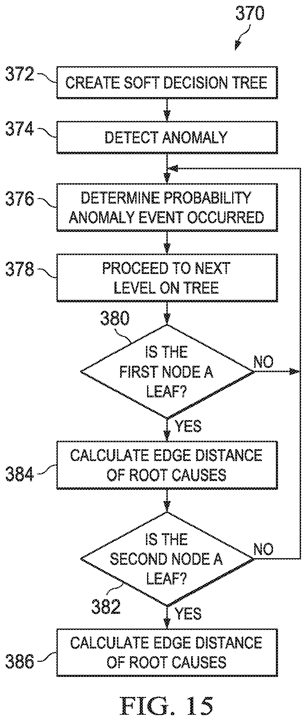

Figure 15 illustrates flowchart 370 for a method of determining the root cause of an anomaly. Initially, in step 372, a soft decision tree is created. In one example, the soft decision is created based on engineering experience and previous anomalies. The soft decision tree may be modified as new root causes of anomalies are observed. This may be done automatically or based on user input.

Next, in step 374, an anomaly is detected. For example, anomalies may be detected using a lower threshold and an upper threshold. An anomaly is detected when a metric is above the upper threshold. Also, an anomaly is detected when the metric stays between the lower threshold and the upper threshold for a delay length of time.

Then, in step 376, the probability that an anomaly has occurred. Initially, the probability that the root anomaly occurred is determined. The probability that anomaly Eij occurred is given by:

$$P_{ij} = \frac{1}{1 + e^{-(f(x_{ij}) - \tau_{ij})}}.$$

Next, in step 378, the system proceeds to the next level. The nodes at the next level are examined.

In step 380, the system determines whether the first node is a leaf. When the first node is not a leaf, the system proceeds to step 382, and when the first node is not a leaf, the system proceeds to step 386. Also, when the first node is not a leaf, the system proceeds to step 376 to determine the probabilities for the first node.

In step 386, the system determines whether the second node is a leaf. When the second node is a leaf, the system proceeds to step 376 to determine the probabilities for the second node. When the second node is a leaf, the edge distances of root causes are determined in step 384.

In step 382, the system determines whether the second node is a leaf. When the second node is not a leaf, the system proceeds to step 376 to determine the probability for the second node. When the second branch is a leaf, the system determines the edge distances for the leaf in step 384. The edge distances for the root causes are calculated in step 384. The edge distance for a node representing a root cause is given by the sum of the logs of the probabilities along that path. The edge distances of all the paths are calculated. The root cause with the shortest edge distance, or several root causes, may be selected for further examination.

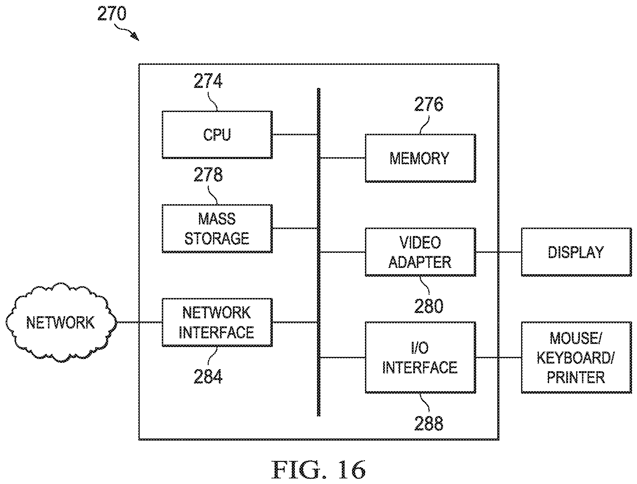

Figure 16 illustrates a block diagram of processing system 270 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system may comprise a processing unit equipped with one or more input devices, such as a microphone, mouse, touchscreen, keypad, keyboard, and the like. Also, processing system 270 may be equipped with one or more output devices, such as a speaker, a printer, a display, and the like. The processing unit may include central processing unit (CPU) 274, memory 276, mass storage device 278, video adapter 280, and I/O interface 288 connected to a bus.

The bus may be one or more of any type of several bus architectures including a memory bus or memory controller, a peripheral bus, video bus, or the like. CPU 274 may comprise any type of electronic data processor. Memory 276 may comprise any type of system memory such as static random access memory (SRAM), dynamic random access memory (DRAM), synchronous DRAM (SDRAM), read-only memory (ROM), a combination thereof, or the like. In an embodiment, the memory may include ROM for use at boot-up, and DRAM for program and data storage for use while executing programs.

Mass storage device 278 may comprise any type of storage device configured to store data, programs, and other information and to make the data, programs, and other information accessible via the bus. Mass storage device 278 may comprise, for example, one or more of a solid state drive, hard disk drive, a magnetic disk drive, an optical disk drive, or the like.

Video adaptor 280 and I/O interface 288 provide interfaces to couple external input and output devices to the processing unit. As illustrated, examples of input and output devices include the display coupled to the video adapter and the mouse/keyboard/printer coupled to the I/O interface. Other devices may be coupled to the processing unit, and additional or fewer interface cards may be utilized. For example, a serial interface card (not pictured) may be used to provide a serial interface for a printer.

The processing unit also includes one or more network interface 284, which may comprise wired links, such as an Ethernet cable or the like, and/or wireless links to access nodes or different networks. Network interface 284 allows the processing unit to communicate with remote units via the networks. For example, the network interface may provide wireless communication via one or more transmitters/transmit antennas and one or more receivers/receive antennas. In an embodiment, the processing unit is coupled to a local-area network or a wide-area network for data processing and communications with remote devices, such as other processing units, the Internet, remote storage facilities, or the like.

**Claims**

1.   A method of detecting an anomaly in a radio access network (100) to be performed by an anomaly detecting system in the radio access network, the method comprising:

  receiving a data point;
  determining a metric (232) in accordance with the data point and a center value indicating the center of expected values;
  determining whether the metric (232) is below a lower threshold, between the lower threshold and an upper threshold, or above the upper threshold;
  determining that the data point is not the anomaly when the metric (232) is below the lower threshold;
  determining that the data point is the anomaly when the metric (232) is above the upper threshold; and
  when the metric (232) is between the lower threshold and the upper threshold, determining a first length of time in which the metrics (232) of a plurality of received data points comprising the data point have been between the lower threshold and the upper threshold, comparing the first length of time to a second length of time of a delay window, and determining that the data point is the anomaly when the first length of time is greater than or equal to the second length of time of the delay window;
  when the data point is determined to be the anomaly, raising an alarm;
  where the data point is a value in the radio access network.

2.   The method of claim 1, further comprising when the metric (232) is between the lower threshold and the upper threshold:

  determining whether a delay window timer (234) has been set; and
  setting the delay window timer (234) when the delay window timer (234) has not been set.

3.   The method of claim 1 or 2, further comprising releasing a delay window timer (234) when the metric (232) is less than the lower threshold.

4.   The method of any claims of claims 1 to 3, wherein determining the metric (232) comprises determining a Mahalanobis distance between the data point and the center value.

5.   The method of any claims of claims 1 to 4, further comprising:

  determining the lower threshold; and
  determining the upper threshold.

6.   The method of claim 5, further comprising receiving a sensitivity level, wherein determining the lower threshold comprises determining the lower threshold in accordance with the sensitivity level, and wherein determining the upper threshold comprises determining the upper threshold in accordance with the sensitivity level.

7.   The method of claim 5 or 6, wherein determining the upper threshold comprises:

  receiving a user input; and
  setting the upper threshold to the user input.

8.   The method of any claims of claims 1 to 7, further comprising determining a probabilistic root cause of the anomaly when the data point is determined to be the anomaly.

9.   The method of claim 8, wherein determining the root cause of the anomaly comprises traversing a soft decision tree to determine the probability that a particular problem caused the anomaly.

10. An anomaly detecting system in a radio access network (100), comprising:

a receiving means configured to receive a data point; and
a determining means configured to:

determine a metric (232) in accordance with the data point and a center value indicating the center of expected values;
determine whether the metric (232) is below a lower threshold, between the lower threshold and an upper threshold, or above the upper threshold;
determine that the data point is not the anomaly when the metric (232) is below the lower threshold;
determine that the data point is the anomaly when the metric (232) is above the upper threshold; and
when the metric (232) is between the lower threshold and the upper threshold,
determine a first length of time in which the metrics (232) of a plurality of received data points comprising the data point have been between the lower threshold and the upper threshold, comparing the first length of time to a second length of time of a delay window, and determine that the data point is the anomaly when the first length of time is greater than or equal to the second length of time of the delay window;

when the data point is determined to be the anomaly, raise an alarm; where the data point is a value in the radio access network.

**Patentansprüche**

1. Verfahren zum Detektieren einer Anomalie in einem Funkzugangsnetzwerk (100), das durch ein Anomaliedetektionssystem in dem Funkzugangsnetzwerk durchgeführt werden soll, wobei das Verfahren Folgendes umfasst:

Empfangen eines Datenpunkts;
Bestimmen einer Metrik (232) gemäß dem Datenpunkt und einem Zentrumswert, der das Zentrum von erwarteten Werten angibt;
Bestimmen, ob die Metrik (232) unter einer unteren Schwelle, zwischen der unteren Schwelle und einer oberen Schwelle oder über der oberen Schwelle liegt;
Bestimmen, dass der Datenpunkt nicht die Anomalie ist, wenn die Metrik (232) unter der unteren Schwelle liegt;
Bestimmen, dass der Datenpunkt die Anomalie ist, wenn die Metrik (232) über der Schwelle liegt; und
wenn die Metrik (232) zwischen der unteren Schwelle und der oberen Schwelle liegt, Bestimmen einer ersten Zeitdauer, in welcher die Metriken (232) von mehreren den Datenpunkt umfassenden empfangenen Datenpunkten zwischen der unteren Schwelle und der oberen Schwelle liegen, Vergleichen der ersten Zeitdauer mit einer zweiten Zeitdauer eines Verzögerungsfensters und Bestimmen, dass der Datenpunkt die Anomalie ist, wenn die erste Zeitdauer größer oder gleich der zweiten Zeitdauer des Verzögerungsfensters ist;
wenn der Datenpunkt als die Anomalie bestimmt wird, Auslösen eines Alarms;
wobei der Datenpunkt ein Wert in dem Funkzugangsnetzwerk ist.

2. Verfahren nach Anspruch 1, ferner umfassend, wenn die Metrik (232) zwischen der unteren Schwelle und der oberen Schwelle liegt:

Bestimmen, ob ein Verzögerungsfensterzeitgeber (234) eingestellt wurde; und
Einstellen des Verzögerungsfensterzeitgebers (234), wenn der Verzögerungsfensterzeitgeber (234) nicht eingestellt wurde.

3. Verfahren nach Anspruch 1 oder 2, ferner umfassend Freigeben eines Verzögerungsfensterzeitgebers (234), wenn die Metrik (232) kleiner als die untere Schwelle ist.

4. Verfahren nach einem der Ansprüche 1 bis 3, wobei das Bestimmen der Metrik (232) Bestimmen einer Mahalanobis-Distanz zwischen dem Datenpunkt und dem Zentrumswert umfasst.

5. Verfahren nach einem der Ansprüche 1 bis 4, das ferner Folgendes umfasst:

Bestimmen der unteren Schwelle; und
Bestimmen der oberen Schwelle.

6. Verfahren nach Anspruch 5, das ferner Empfangen eines Empfindlichkeitsniveaus umfasst, wobei das Bestimmen der unteren Schwelle das Bestimmen der unteren Schwelle gemäß dem Empfindlichkeitsniveau umfasst und wobei das Bestimmen der oberen Schwelle das Bestimmen der oberen Schwelle gemäß dem Empfindlichkeitsniveau umfasst.

7. Verfahren nach Anspruch 5 oder 6, wobei das Bestimmen der oberen Schwelle Folgendes umfasst:

Empfangen einer Benutzereingabe; und
Einstellen der oberen Schwelle auf die Benutzereingabe.

8. Verfahren nach einem Anspruch der Ansprüche 1 bis 7, das ferner Bestimmen einer probabilistischen Kernursache der Anomalie umfasst, wenn der Datenpunkt als die Anomalie bestimmt wird.

9. Verfahren nach Anspruch 8, wobei das Bestimmen der Kernursache der Anomalie Durchqueren eines weichen Entscheidungsbaums zum Bestimmen der Wahrscheinlichkeit, dass ein besonderes Problem die Anomalie verursacht hat, umfasst.

10. Anomaliedetektionssystem in einem Funkzugangsnetzwerk (100), das Folgendes umfasst:

ein Empfangsmittel zum Empfangen eines Datenpunkts; und
ein Bestimmungsmittel, das ausgelegt ist zum:

Bestimmen einer Metrik (232) gemäß dem Datenpunkt und einem Zentrumswert, der das Zentrum von erwarteten Werten angibt;
Bestimmen, ob die Metrik (232) unter einer unteren Schwelle, zwischen der unteren Schwelle und einer oberen Schwelle oder über der oberen Schwelle liegt;
Bestimmen, dass der Datenpunkt nicht die Anomalie ist, wenn die Metrik (232) unter der unteren Schwelle liegt;
Bestimmen, dass der Datenpunkt die Anomalie ist, wenn die Metrik (232) über der Schwelle liegt; und wenn die Metrik (232) zwischen der unteren Schwelle und der oberen Schwelle liegt,
Bestimmen einer ersten Zeitdauer, in welcher die Metriken (232) von mehreren den Datenpunkt umfassenden empfangenen Datenpunkten zwischen der unteren Schwelle und der oberen Schwelle liegen, Vergleichen der ersten Zeitdauer mit einer zweiten Zeitdauer eines Verzögerungsfensters und Bestimmen, dass der Datenpunkt die Anomalie ist, wenn die erste Zeitdauer größer oder gleich der zweiten Zeitdauer des Verzögerungsfensters ist;
wenn der Datenpunkt als die Anomalie bestimmt wird, Auslösen eines Alarms;
wobei der Datenpunkt ein Wert in dem Funkzugangsnetzwerk ist.

**Revendications**

1. Procédé de détection d'une anomalie dans un réseau (100) d'accès radio, à réaliser par un système de détection d'anomalies dans le réseau d'accès radio, le procédé comportant les étapes consistant à :

recevoir un point de données ;
déterminer une métrique (232) d'après le point de données et une valeur centrale indiquant le centre de valeurs prévues ;
déterminer si la métrique (232) est au-dessous d'un seuil inférieur, entre le seuil inférieur et un seuil supérieur, ou au-dessus du seuil supérieur ;
déterminer que le point de données n'est pas l'anomalie lorsque la métrique (232) est au-dessous du seuil inférieur ;
déterminer que le point de données est l'anomalie lorsque la métrique (232) est au-dessus du seuil supérieur ; et lorsque la métrique (232) est entre le seuil inférieur et le seuil supérieur, déterminer un premier laps de temps pendant lequel les métriques (232) d'une pluralité de points de données reçus comprenant le point de données ont été entre le seuil inférieur et le seuil supérieur, comparer le premier laps de temps à un second laps de temps d'une fenêtre de retard, et déterminer que le point de données est l'anomalie lorsque le premier laps de temps est supérieur ou égal au second laps de temps de la fenêtre de retard ;

lorsqu'il est déterminé que le point de données est l'anomalie, déclencher une alarme ;

le point de données étant une valeur dans le réseau d'accès radio.

2. Procédé selon la revendication 1, comportant en outre, lorsque la métrique (232) est entre le seuil inférieur et le seuil supérieur, les étapes consistant à :

déterminer si un temporisateur (234) de fenêtre de retard a été établi ; et

établir le temporisateur (234) de fenêtre de retard lorsque le temporisateur (234) de fenêtre de retard n'a pas été établi.

3. Procédé selon la revendication 1 ou 2, comportant en outre la libération d'un temporisateur (234) de fenêtre de retard lorsque la métrique (232) est inférieure au seuil inférieur.

4. Procédé selon l'une quelconque des revendications 1 à 3, la détermination de la métrique (232) comportant la détermination d'une distance de Mahalanobis entre le point de données et la valeur centrale.

5. Procédé selon l'une quelconque des revendications 1 à 4, comportant en outre :

la détermination du seuil inférieur ; et

la détermination du seuil supérieur.

6. Procédé selon la revendication 5, comportant en outre la réception d'un niveau de sensibilité, la détermination du seuil inférieur comportant la détermination du seuil inférieur d'après le niveau de sensibilité, et la détermination du seuil supérieur comportant la détermination du seuil supérieur d'après le niveau de sensibilité.

7. Procédé selon la revendication 5 ou 6, la détermination du seuil supérieur comportant :

la réception d'une entrée d'utilisateur ; et

le réglage du seuil supérieur sur l'entrée d'utilisateur.

8. Procédé selon l'une quelconque des revendications 1 à 7, comportant en outre la détermination d'une cause racine probabiliste de l'anomalie lorsqu'il est déterminé que le point de données est l'anomalie.

9. Procédé selon la revendication 8, la détermination de la cause racine de l'anomalie comportant le parcours d'un arbre de décision non stricte pour déterminer la probabilité qu'un problème particulier ait causé l'anomalie.

10. Système de détection d'anomalies dans un réseau (100) d'accès radio, comportant :

un moyen de réception configuré pour recevoir un point de données ; et

un moyen de détermination configuré pour :

déterminer une métrique (232) d'après le point de données et une valeur centrale indiquant le centre de valeurs prévues ;

déterminer si la métrique (232) est au-dessous d'un seuil inférieur, entre le seuil inférieur et un seuil supérieur, ou au-dessus du seuil supérieur ;

déterminer que le point de données n'est pas l'anomalie lorsque la métrique (232) est au-dessous du seuil inférieur ;

déterminer que le point de données est l'anomalie lorsque la métrique (232) est au-dessus du seuil supérieur ; et

lorsque la métrique (232) est entre le seuil inférieur et le seuil supérieur, déterminer un premier laps de temps pendant lequel les métriques (232) d'une pluralité de points de données reçus comprenant le point de données ont été entre le seuil inférieur et le seuil supérieur, comparer le premier laps de temps à un second laps de temps d'une fenêtre de retard, et déterminer que le point de données est l'anomalie lorsque le premier laps de temps est supérieur ou égal au second laps de temps de la fenêtre de retard ;

lorsqu'il est déterminé que le point de données est l'anomalie, déclencher une alarme ;

le point de données étant une valeur dans le réseau d'accès radio.

100

108 108

| RNC | RNC |
|---|---|

| COMMUNICATIONS CONTROLLER | COMMUNICATIONS CONTROLLER | COMMUNICATIONS CONTROLLER |
|---|---|---|

102 102 102

| UE | UE | UE | | UE | | UE | UE |

104 104 104 104 104 104

FIG. 1

110

112 TRAINING DATA

114 MODEL EACH KPI BEHAVIOR INDIVIDUALLY

116 DETECTION ALGORITHM

118 NEW OBSERVATIONS

FIG. 2

14

$\rho(\chi_2;\mu_2,\sigma_2^2)$

120

**FIG. 3A**

$\rho(\chi_1;\mu_1,\sigma_1^2)$

130

**FIG. 3B**

FIG. 4

FIG. 5

FIG. 6A

FIG. 6B

FIG. 7

FIG. 8

220

222

OUTER BAND

MIDDLE/DONUT BAND  224

INNER BAND
226

FIG. 9

230

234

DONUT
REGION

ALARM

FAILURE
KPI

232

DELAY WINDOW

TIME

FIG. 10

240

DETERMINE LOWER AND UPPER THRESHOLDS — 242

RECEIVE DATA POINT — 244

IS DATA POINT IN OUTER BAND, INNER BAND, OR MIDDLE BAND? 246

250

INNER BAND

DO NOT RAISE ALARM AND RESET DELAY WINDOW TIMER

OUTER BAND

MIDDLE BAND

IS DELAY WINDOW TIMER SET? 254

NO

SET DELAY WINDOW TIMER

256

YES

HAS DELAY WINDOW TIMER EXPIRED? 258

NO

YES

RAISE ALARM — 246

FIG. 11

FIG. 12

EP 3 138 238 B1

290

FIRST RNC LEVEL (ROOT) 400

292 DID ANOMALY EVENT $E_1$ OCCUR? NO YES

SECOND RNC LEVEL 402

294 DID ANOMALY EVENT $E_{21}$ OCCUR? NO YES

296 DID ANOMALY EVENT $E_{22}$ OCCUR? NO YES

CELL LEVEL 404

298 DID ANOMALY EVENT $E_{31}$ OCCUR? NO YES

300 DID ANOMALY EVENT $E_{32}$ OCCUR? NO YES

304 DID ANOMALY EVENT $E_{33}$ OCCUR? YES NO

LEAVES 406

NOT PROBLEM OF TYPE X — 306

CELL ONLY PROBLEM TYPE X — 308

LOOK AT OTHER ANOMALY EVENTS FOR ROOT CAUSE — 310

RNC AND CELL PROBLEM TYPE Y — 312

UNKNOWN PROBLEM — 302

LOOK AT OTHER ANOMALY EVENTS FOR ROOT CAUSE — 314

RNC AND CELL PROBLEM TYPE Z — 316

FIG. 13

EP 3 138 238 B1

360

THE LOGISTIC FUNCTION, 1/(1+exp(-x))

FIG. 14

370

372 — CREATE SOFT DECISION TREE

374 — DETECT ANOMALY

376 — DETERMINE PROBABILITY ANOMALY EVENT OCCURRED

378 — PROCEED TO NEXT LEVEL ON TREE

380 IS THE FIRST NODE A LEAF? — NO

YES

384 — CALCULATE EDGE DISTANCE OF ROOT CAUSES

IS THE SECOND NODE A LEAF? — NO

382 YES

386 — CALCULATE EDGE DISTANCE OF ROOT CAUSES

FIG. 15

270

274

CPU

278

MASS
STORAGE

NETWORK

NETWORK
INTERFACE

284

276

MEMORY

VIDEO
ADAPTER

280

I/O
INTERFACE

288

DISPLAY

MOUSE/
KEYBOARD/
PRINTER

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012140601 A1
- US 20130329571 A1

**Non-patent literature cited in the description**

- **LING HUANG.** D-Trigger: A general framework for efficient online detection. Beijing University of Aeronautics and Astronautics, 20 December 2007
- **GERHARD MÜNZ et al.** Traffic Anomaly Detection Using K-Means Clustering. *GI/ITG Workshop MMBnet,* 14 September 2007
- Reduction of False Alarm Rate in Detecting Network Anomaly using Mahalanobis Distance and Similarity Measure. **N. SRINIVASAN et al.** SIGNAL PROCESSING, COMMUNICATIONS AND NETWORKING, 2007. ICSCN '07 INTERNATIONAL CONFERENCE ON. IEEE, 01 February 2007, 366-371
- **C. S. HOOD et al.** PROBABILISTIC NETWORK FAULT DETECTION. *GLOBAL TELECOMMUNICATIONS CONFERENCE 1996, GLOBECOM '96,* 18 November 1996, 1872-1876